# EUROPEAN PATENT SPECIFICATION

(11) **EP 0 494 290 B1**
(45) Date of publication and mention of the grant of the patent: **05.02.1997**
(21) Application number: 91913835.4
(22) Date of filing: 24.07.1991
(51) Int. Cl.: C08J 11/20, C08J 11/06, C08J 11/10, C08J 7/02, C08J 5/18

(54) **METHOD FOR OBTAINING AN ELASTOMER PRODUCT WITH HIGH PETROLEUM AND ITS BY-PRODUCTS ABSORPTION POWER**
VERFAHREN ZUR HERSTELLUNG EINES ELASTOMEREN PRODUKTS MIT HOHEM ABSORPTIONSVERMÖGEN FÜR ERDÖL UND DESSEN NEBENPRODUKTE
PROCEDE D'OBTENTION D'UN PRODUIT ELASTOMERE A POUVOIR D'ABSORPTION ELEVE DU PETROLE ET DE SES SOUS-PRODUITS

(30) Priority: 26.07.1990 BR 9003625
(43) Date of publication of application: 15.07.1992
(73) Proprietor: OLIVEIRA DA CUNHA LIMA, Luiz Carlos, 22460 Rio de Janeiro (BR)
(72) Inventor: OLIVEIRA DA CUNHA LIMA, Luiz Carlos, 22460 Rio de Janeiro (BR)
(74) Representative: Kiliaridis, Constantin
(86) International application number: BR9100013
(87) International publication number: WO9201739

(56) References cited:
- WO-A-86/05192
- GB-A- 505 156
- US-A- 1 374 231
- US-A- 4 257 925
- Derwent Acession No. 77-315 13Y (WPI) & JP A 50/98 987

## Description

The present invention is related to a process for the absorption of spillings of petroleum and petroleum by-products in using an elastomeric product which is able to absorb great amounts of petroleum and its by-products.

As it is commonly known, there are many methods of decontaminating the environment of petroleum spillings, namely on the sea, but none of them is sufficiently effective in view of the preservation of the nature. One of the best known methods comprises blending an emulsifier with the petroleum spilled on the sea, whereupon the petroleum is emulsified with the sea water and disappears from sight. However, the pollution has become still more severe since on one hand, the petroleum has not been removed, and on the other hand, an emulsifier which may itself also be a polluting agent, has been added.

Another known method is to add a gel forming agent to the spillings which absorbs the petroleum and sinks together with it; however, the mixture will cover the bed of the water where the petroleum was spilled. In this case too, not only the polluting petroleum is transferred from the surface to the ground but also the gel forming agent which may be a polluting substance too, which detrimentally influences the flora and the fauna of the environment.

There are still other methods, such as to surround the puddle of spilled petroleum with floaters and, at the same time, trying to pump the petroleum with centrifugal pumps on board of special boats where the petroleum is separated from the water and the latter is returned to the environment. This process is a less polluting method but it can only applied to limited spillings.

All the depolluting methods employed until now are too expensive or merely transfer the pollution to another place. On the other hand, when the petroleum is scattered over rocks or absorbed by sand, it becomes very difficult to remove owing to its high viscosity and to the fact that it combines with any material which it has covered.

Starting from this prior art, the object of this invention is to provide a process for the absorption of petroleum spillings which overcomes the drawbacks indicated above. This process is defined in the independent claim whereas special embodiments are made the subject of the dependent claims.

The rubber based product which is used as an absorbent in the process of the invention is derived from vulcanised rubber artefacts such as tires, shoe heels, shoe soles, rugs, etc. These artefacts are ground, optionally together with other materials which may improve the final application, in the presence of a solvent in a manganese steel ball mill until an impalpable slurry is obtained which is then removed from the mill and dried. The application of the product thus obtained is simple: it is only necessary to pour the product over the spilled petroleum in one or more layers depending on the thickness of the floating petroleum. After some time the product agglomerate absorbs the petroleum and its by-products in forming a slurry which can be removed and recycled, if desired, or burnt.

The product used in the process of the invention has a density equal to or less than water, and it is produced in the form of a powder or of grains or sheets. It has a high absorbing power for petroleum and its by-products and is less expensive than the materials used in any other known depolluting methods. It is important to note that the use of a low cost raw material as it is the case with discarded rubber products such as tires, renders possible the elimination of still another source of pollution difficult to eliminate.

The present process comprises grinding little fragments of vulcanised rubber in the presence of a solvent and, optionally, of resins, oils, devulcanisers, pigments etc., until a very fine, impalpable slurry is obtained, which is then dried. A powder is obtained which can also be transformed into grains or sheets as it will be described later. These materials can be placed on the surface of the spilled petroleum or its by-products.

The choice of the products to be placed into the manganese steel ball mill, which is used for grinding, in addition to the rubber fragments, will depend on the nature of the substances to be absorbed: For instance, if the spilled product is a lubricating oil, it would be advisable to use an absorbent prepared with the addition of a paraffin compatible resin, and if the oil to be absorbed is highly aromatic, it is appropriate to use an absorbent prepared with the addition of a resin more compatible with aromatic compounds.

It is known that the majority of vulcanised rubber compositions have a density higher that that of water. In order to provide the final absorbing product with an adequate density for absorbing the desired material, it would be necessary to add pure rubber whose density is about 0.92 kg/l to the vulcanised rubber pieces. If the environment where the petroleum or its by-products have been spilled is water, the density of the absorbent must not be higher than 1 kg/l. If the environment where the spilling happened is on land, there will be no need for the absorbent to have low densities which could even be higher than 1 kg/l.

There are cases where it is desired to confer a better resistance to the absorbing material when it is swollen with absorbed petroleum or its by-products. This may be achieved by an increase of the number of crosslinking sites or by the creation of new crosslinking points. To this end, a certain amount of a vulcanising agent may be added to the slurry obtained in the ball mill.

The use of the solvent as a means for making the vulcanised rubber soluble or dispersed is essential: During drying the slurry coming out of the ball mill to a powder or grains, it becomes porous. Thus, the absorption is effected not only inside the rubber macromolecule but also within the pores of said powder or grains.

-The choice of the particle size of the powder or the grains will also depend on the application conditions. Thus, it would be wasteful to use too fine particles of the absorbent in windy weather where it is preferred to apply coarser particles.

The absorbent particles may also be transformed into sheets wherein they are linked together by foreign materials such as very fine wires ore linked to each other by means of resins, adhesives, etc., or by simple compression or thermal agglomeration.

The following examples further illustrate the invention.

### Example 1

About 200 g of tire chips (density = 1.13 kg/l), 287 g of shoe soles consisting of vulcanised pure rubber (density = 0.92 kg/l), 10 g of a phenolic resin, 1 g of a devulcaniser, and 2,800 g of toluene were charged into a manganese steel ball mill. The batch was ground until the formation of an impalpable slurry in the mill. The product was removed and dried, and grains having a size of 30 mesh were obtained.

About 100 g of petroleum were spilled on a tray filled with water. About 20 g of the grains as obtained above were pulverised on the floating petroleum with the aid of a 20 mesh sieve. After a 2 hours resting period, all petroleum had been absorbed.

### Example 2

The experiment of Example 1 was repeated with the modification that the water, instead of leaving it at rest, was constantly stirred up. It has been observed that the absorption took place in a much quicker manner: instead after 2 hours, all the petroleum has been absorbed after 20 minutes.

### Example 3

About 200 g of tire chips (d = 1.11 kg/l), 230 g of polyisoprene ( d = 0.92) and 2.800 g of trichloroethylene were charged into a manganese steel ball mill. The batch was ground until the formation of an impalpable slurry. It was blended with monofilament pieces, rayon staple fibres, and then dried on heated cylinders. The sheet obtained, having a thickness of 2 mm, was cut into pieces of 50 x 50 mm.

About 100 g of petroleum were spilled on a tray filled with water, and the spilling was covered up with the pieces of the rubber sheet described above. The petroleum was completely absorbed and thus separated from the water.

### Example 4

The experiment of Example 3 was repeated as to the preparation of the powder. The powder was then charged on a screen of about 100 mesh, well teased, the screen was clamped by the edges and a low pressure was exerted on it so as to fix the powder in its position. A resin, dissolved in alcohol and insoluble in water and petroleum and its by-product, was then pulverised onto the powder held by the screen.

After drying, the agglomerate thus produced was cut into pieces of 50 x 50 mm. Fuel oil was spilled on the surface of water in a tray, and the little plates prepared as above were placed on the surface. The fuel oil was fully absorbed and separated from the water.

### Example 5

About 400 g of pre-vulcanised rubber, chopped into little pieces of about 2 x 2 mm, and 2.800 g of toluene were charged into a manganese steel ball mill. The charge was ground until its transformation into an impalpable slurry. The product, after drying and transforming into a powder, was dispersed over the surface of petroleum spilled on water in the same way as in Example 1. The petroleum was absorbed.

## Claims

1. A process for the absorption of petroleum spillings in which the spilling is contacted with an absorbent elastomeric material in the form of powder, grains or sheets, obtained from reclaimed vulcanised rubber which
1) is ground in the presence of a solvent in a manganese steel ball mill until an impalpable slurry is obtained,
2) the slurry is removed from the mill and dried, and
3) the residue is applied to the spilled petroleum.

2. The process according to claim 1, wherein the residue is used as such or agglutinated by filaments, resins, rubber, or with particles simply linked to each other by mere heating, in order to form sheets.

3. The process according to claim 1, wherein the elastomeric product has a density equal to or less than water.

4. The process of claim 1, wherein the reclaimed vulcanised rubber is originated from tire chips, shoe heels, shoe soles, rugs and latex artefacts, burrs and prevulcanised rubber.

5. The process of claim 1, wherein the reclaimed vulcanised rubber is milled in the further presence of green rubber, polyisoprene, resins, oils and/or devulcanising agents.

6. The process of claim 1, wherein toluene or trichloroethylene are used as a solvent.

7. The process of any one of the preceding claims, wherein said elastomeric material is contacted for absorption with petroleum, petroleum by-products or fuel which are spilled on water.

## Patentansprüche

1. Verfahren zur Absorption von durch aus - oder überlaufendes Erdöl erzeugten Verschmutzungen, wonach die Erdölverschmutzungen mit einem absorbierenden, elastomeren Material in Form von Pulver, Körnern oder Sheets in Kontakt gebracht wird, welches aus zurückgewonnenem vulkanisierten Gummi erhalten wurde, welcher
1) in Gegenwart eines Lösungsmittels in einer Mangan-Stahl-Kugelmühle gemahlen wird, bis ein sehr feiner Schlamm erhalten wird,
2) der Schlamm aus der Mühle entfernt und getrocknet wird und
3) der Rückstand auf die Erdölverschmutzung aufgebracht wird.

2. Verfahren nach Anspruch 1, wobei der Rückstand als solcher oder im durch Fäden, Harze, Gummi verklebtem Zustand oder mit einfach durch blosses Erhitzen miteinander verbundenen Teilchen verwendet wird, um Sheets zu bilden.

3. Verfahren nach Anspruch 1, wobei das elastomere Produkt eine Dichte hat, welche gleich der oder geringer als die von Wasser ist.

4. Verfahren nach Anspruch 1, wobei der wiedergewonnene vulkanisierte Gummi von Reifenstücken, Schuhabsätzen, Schuhsohlen, Teppichen und Latex-Artefakten, Bearbeitungsrückständen und vorvulkanisiertem Gummi herrührt.

5. Verfahren nach Anspruch 1, wobei der wiedergewonnene vulkanisierte Gummi in der weiteren Gegenwart von grünem Gummi, Polyisopren, Harzen, Oelen und/oder devulkanisierenden Mitteln gemahlen wird.

6. Verfahren nach Anspruch 1, wobei Toluol oder Trichloräthylen als Lösungsmittel verwendet werden.

7. Verfahren nach einem der vorangehenden Ansprüche, wobei das erwähnte elastomere Material zur Absorption mit Erdöl, Erdöl-Nebenprodukten oder Kraftstoff in Kontakt gebracht wird, welche auf Wasser ausgelaufen sind.

## Revendications

1. Procédé d'absorption de nappes de pétrole selon lequel la nappe est mise en contact avec un matériau élastomère absorbant sous la forme d'une poudre, des grains ou des feuilles, obtenu à partir du caoutchouc vulcanisé récupéré, lequel :
1) est broyé en présence d'un solvant dans un broyeur à billes en acier de manganèse jusqu'à l'obtention d'un coulis impalpable,
2) le coulis est évacué du broyeur et séché, et
3) le résidu est appliqué sur le pétrole répandu.

2. Procédé selon la revendication 1, caractérisé par le fait que le résidu est utilisé tel quel ou agglutiné par des filaments, des résines, du caoutchouc, ou simplement avec des particules liées les unes aux autres par chauffage, dans le but de former des feuilles.

3. Procédé selon la revendication 1, caractérisé par le fait que le fait que le produit élastomère présente une densité égale ou inférieure à celle de l'eau.

4. Procédé selon la revendication 1, caractérisé par le fait que le fait que le caoutchouc vulcanisé récupéré vient de copeaux de pneus, de talons de chaussures, de semelles de chaussures, de tapis, de produits oeuvrés en latex, des bavures et du caoutchouc prévulcanisé.

5. Procédé selon la revendication 1, caractérisé par le fait que le caoutchouc vulcanisé récupéré est broyé en présence de caoutchouc vert, du polyisoprène, des résines, des huiles et/ou des agents de dévulcanisation.

6. Procédé selon la revendication 1, caractérisé par le fait que le toluène ou le trichloroéthylène sont utilisés en tant que solvant.

7. Procédé selon l'une des revendications précédentes, caractérisé par le fait que ledit produit élastomère est mis en contact, pour l'absorption, avec le pétrole, les sous produits de pétrole ou du fioul qui sont répandus sur de l'eau.
